# EUROPÄISCHE PATENTANMELDUNG

(11) **EP 1 816 047 A2**
(43) Veröffentlichungstag der Anmeldung: **08.08.2007**
(21) Anmeldenummer: 07100041.8
(22) Anmeldetag: 03.01.2007
(51) Int. Cl.: B60T 8/36, F16K 31/06

(54) **Magnetventil**

(30) Priorität: 01.02.2006 DE 102006004530
(71) Anmelder: ROBERT BOSCH GMBH, 70442 Stuttgart (DE)
(72) Erfinder: Speer, Harald, 71691 Freiberg (DE); Michl, Thomas, 70499 Stuttgart (DE); Schindler, Ralf, 71229 Leonberg (DE); Kratzer, Dietmar, 71732 Tamm (DE); Vier, Elmar, 71691 Freiberg A. N. (DE); Schuster, Gerhard, 71691 Freiberg (DE)

(57) **Zusammenfassung**

Die Erfindung betrifft ein Magnetventil mit einem Ventileinsatz (1) und einem über eine Stößelführung (11) im Ventileinsatz (1) beweglich geführten Stößel (2), welcher sich über eine an einer Anlagefläche des Stößels (2) anliegende Rückstellfeder (3) auf einem Ventilkörper (4) abstützt, wobei die Rückstellfeder an einem Ende von einer an die Anlagefläche anschließende Federführung des Stößels (2) von innen radial geführt ist. Erfindungsgemäß sind Zentriermittel (2.6) vorhanden, welche so am Stößel (2) angeordnet sind, dass die Rückstellfeder (3) von innen über einen wesentlichen Teil ihrer Länge zentriert und radial geführt ist.

## Beschreibung

### Stand der Technik

Die Erfindung geht aus von einem Magnetventil nach der Gattung des unabhängigen Patentanspruchs 1.

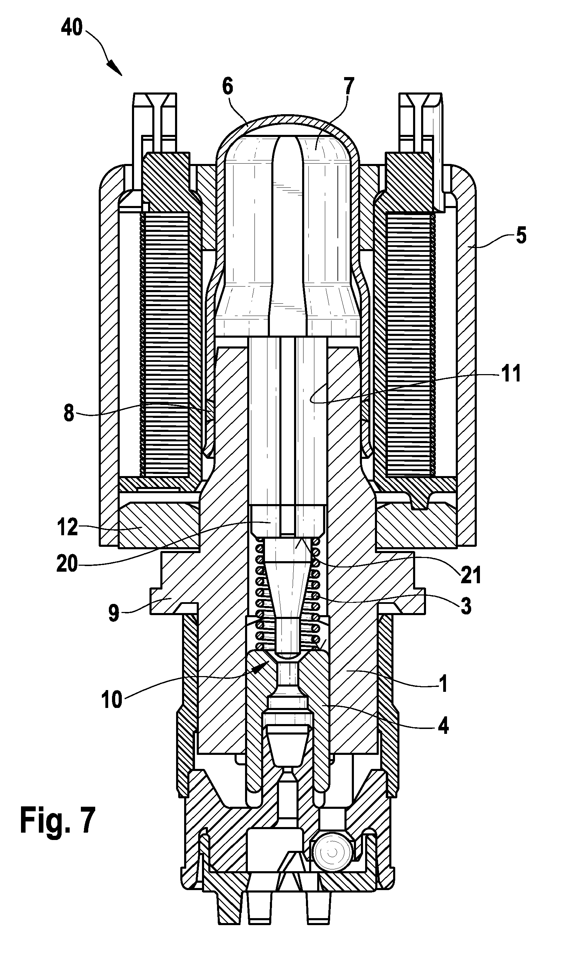

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 7 dargestellt. Wie aus Figur 7 ersichtlich ist, umfasst das herkömmliche stromlos offene Magnetventil 40 neben einer Magnetbaugruppe 5 mit einer Abdeckscheibe 12 eine Ventilpatrone, welche eine Kapsel 6, einen Ventileinsatz 1, einen Stößel 20, eine Rückstellfeder 3 und einen Anker 7 umfasst. Bei der Herstellung des Magnetventils 40 werden die Kapsel 6 und der Ventileinsatz 1 der Ventilpatrone durch Pressen aufeinander gefügt und durch eine Dichtschweißung 8 wird die Ventilpatrone hydraulisch gegenüber der Atmosphäre abgedichtet. Zusätzlich nimmt der Ventileinsatz 1 die im hydraulischen System auftretenden Druckkräfte auf und leitet diese über einen Verstemmflansch 9 an einen nicht dargestellten Verstemmbereich auf einem Fluidblock weiter. Zudem nimmt der Ventileinsatz 1 den so genannten Ventilkörper 4 auf, welcher einen Ventilsitz 10 umfasst, in welchen der Stößel 20 dichtend eintaucht, um die Dichtfunktion des Magnetventils 40 umzusetzen. Wie weiter aus Figur 7 ersichtlich ist, werden der Stößel 20 und die Rückstellfeder 3 im Ventileinsatz 1 geführt, wobei der Stößel 20 in einer Stößelführung 11 geführt ist und die Rückstellfeder 3 an einem Ende auf dem Stößel 20 radial geführt und zentriert an einer Anlagefläche 21 anliegt und am anderen Ende auf dem Ventilkörper 4 axial geführt aufliegt.

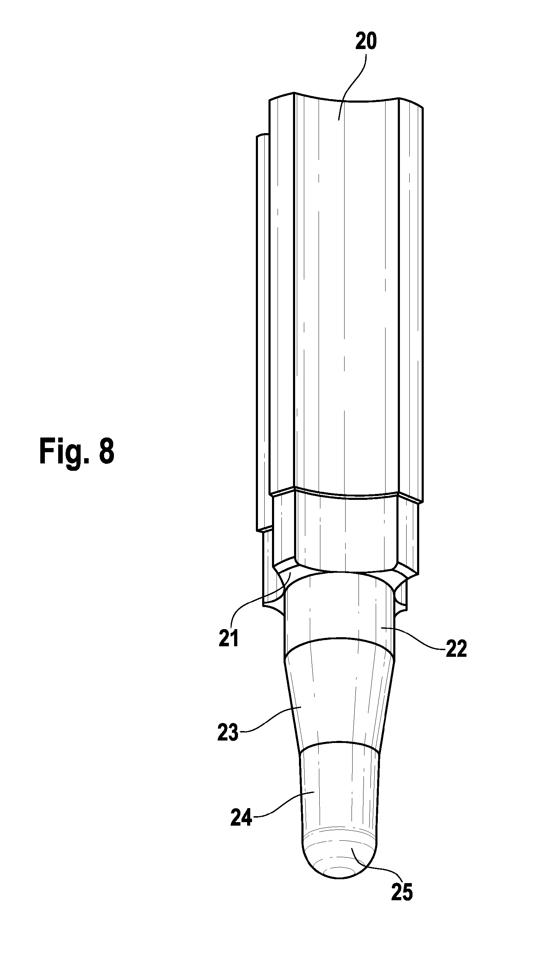

Figur 8 zeigt ein herkömmliches Ausführungsbeispiel des Stößels 20. Wie aus Figur 8 ersichtlich ist, umfasst der herkömmliche Stößel 20 die axiale Anlagefläche 21, eine Federführung 22, auf welche die Rückstellfeder 3 aufgesteckt und im kurzen Bereich der Federführung 22 innen radial geführt wird, einen Stößelkonus 23 mit einem Übergangsbereich 24 zwischen der Federführung 22 und einer Stößelkalotte 25, welche dichtend in den Ventilsitz 10 eintaucht. Eine weitere Fixierung bzw. Zentrierung der Rückstellfeder 3 an ihrem Einbauort ist nicht vorgesehen. Der Strömungsweg des Fluids durch das Magnetventil verläuft über die Rückstellfeder 3, so dass die Federkraft der Rückstellfeder 3 im Bereich der Strömungskräfte wirkt, welche aufgrund der Strömung auf die Windungen der Rückstellfeder 3 wirken können. Liegt nun die Größenordnung der Federkraft und die Größeordnung der Steifigkeit der Rückstellfeder 3 im Bereich der Kräfte der auf die Federwindungen wirkenden Strömung, so kann es zu einer unerwünschten Beeinflussung des Federverhaltens durch die Strömung kommen. So kann es beispielsweise zum Abheben der Rückstellfeder 3 von ihrer Auflage am Ventilkörper 4 kommen, was mit einer entsprechenden (Kraft-)Wirkung auf den Ventilstößel 20 und einer unerwünschter Beeinflussung der Ventilfunktion verbunden sein kann. Des Weiteren kann die ungeführte Rückstellfeder 3 seitlich ausgelenkt oder versetzt werden, so dass es zu Berührungen und damit zu Reibkräften zwischen dem Ventileinsatz 1 und dem Stößel 20 kommen kann. Durch die erzeugten Reibkräfte kann das Ventilverhalten negativ beeinflusst werden und der Stößel 20 kann durch die evtl. gratbehafteten Federenden beschädigt werden.

### Vorteile der Erfindung

Das erfindungsgemäße Magnetventil mit den Merkmalen des unabhängigen Patentanspruchs 1 hat demgegenüber den Vorteil, dass Zentriermittel vorhanden sind, welche so am Stößel angeordnet sind, dass die Rückstellfeder von innen über einen wesentlichen Teil ihrer Länge zentriert und radial geführt ist und dadurch stabilisiert ist. Dadurch kann in vorteilhafter Weise verhindert werden, dass Strömungskräfte, welche auf die Windungen der Rückstellfeder wirken, zu einem seitlichen Ausbrechen der Rückstellfeder führen können, oder die Rückstellfeder von einer Auflage abheben können bzw. die Windungen der Rückstellfeder relativ zueinander in Bewegung bzw. in Schwingungen versetzen können. Insbesondere wird durch die Zentriermittel ein nur axial an einem Ventilkörper anliegendes Federende zentriert und stabilisiert, ohne die Montierbarkeit und Einstellbarkeit des Magnetventils negativ zu beeinflussen.

Durch die in den abhängigen Ansprüchen aufgeführten Maßnahmen und Weiterbildungen sind vorteilhafte Verbesserungen des im unabhängigen Patentanspruch angegebenen Magnetventils möglich.

Besonders vorteilhaft ist, dass die Zentriermittel als mindestens zwei von der Federführung des Stößels ausgehende axial verlaufende Zentrierstege ausgeführt sind, welche den Umfang der Federführung über einen Stößelkonus bis in einen Übergangsbereich des Stößels verlängern. Durch die mindestens zwei axialen Zentrierstege kann die Rückstellfeder in vorteilhafter Weise über eine längere Strecke radial von innen geführt werden, so dass die Rückstellfeder nahezu über die gesamte Länge zentriert und stabilisiert wird. Zudem wird das Durchflussverhalten der Ventilbaugruppe durch die Ausführung der Zentriermittel als axiale Zentrierstege kaum beeinflusst. Die Abmessungen der mindestens zwei axialen Zentrierstege sind in radialer Richtung an den Innendurchmesser der Rückstellfeder angepasst, so dass das nur axial am Ventilkörper anliegende Federende so weit wie möglich innen radial geführt wird. Die mindestens zwei axialen Zentrierstege sind in vorteilhafter Weise so ausgelegt, dass ein umlaufend wirkender Strömungskraftanteil durch das Fluid nicht zu einer Rotationsbewegung des Stößels führt. Die Länge und die Form der axialen Zentrierstege in Richtung einer Stößelkalotte sind auf die Einsatzbedingungen abgestimmt und verhindern eine negative Beeinflussung des Durchflussverhaltens der Ventilbaugruppe und ein Einhaken von Federteilen bzw. von Federwindungen an den Zentrierstegen, wodurch in vorteilhafter Weise eine gleich bleibende Federkraftwirkung auf den Stößel und ein kontrollierbares Ventilverhalten gewährleistet werden kann.

In Ausgestaltung des erfindungsgemäßen Magnetventils laufen die mindestens zwei axial verlaufenden Zentrierstege an einem Ende, welches der Stößelkalotte zugewandt ist, beispielsweise nahezu rechtwinklig aus. Zusätzlich können die nahezu rechtwinkligen Enden der mindestens zwei axial verlaufenden Zentrierstege abgerundet ausgeführt werden, wobei ein Radius der Abrundung von Eigenschaften der Rückstellfeder abhängig ist. Alternativ können die mindestens zwei axial verlaufenden Zentrierstege dem der Stößelkalotte zugewandten Ende flach unter einem vorgebbaren Winkel auslaufen. Zusätzlich können die unter einem vorgebbaren Winkel flach auslaufenden Enden der mindestens zwei axial verlaufenden Zentrierstege einen abgerundeten Übergang aufweisen, dessen Radius von Eigenschaften der Rückstellfeder abhängig ist.

In weiterer Ausgestaltung des erfindungsgemäßen Magnetventils umfasst der Stößel vier axial verlaufende Zentrierstege, welche vorzugsweise einen mittleren Abstand von 90° zu einander aufweisen.

Alternativ können die Zentriermittel als verlängerte Federführung ausgeführt werden, welche den Stößelkonus und den Übergangsbereich des Stößels verkürzt, wobei der Stößelkonus in Richtung der Stößelkalotte verlagert wird und die Rückstellfeder in vorteilhafter Weise von innen über den wesentlichen Teil ihrer Länge zentriert und radial geführt ist.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: eine schematische Schnittdarstellung eines Ausführungsbeispiels eines erfindungsgemäßen Magnetventils,
- Figur 2: eine schematische perspektivische Darstellung eines Stößels für das erfindungsgemäße Magnetventil gemäß Figur 1,
- Figur 3 und 4: schematische Schnittdarstellungen eines Details D aus Figur 1,
- Figur 5: eine schematische Schnittdarstellung eines weiteren Ausführungsbeispiels eines erfindungsgemäßen Magnetventils,
- Figur 6: eine schematische perspektivische Darstellung eines Stößels für das erfindungsgemäße Magnetventil gemäß Figur 5,
- Figur 7: eine schematische Schnittdarstellung eines herkömmlichen Magnetventils, und
- Figur 8: eine schematische perspektivische Darstellung eines Stößels für das herkömmliche Magnetventil gemäß Figur 7.

### Beschreibung

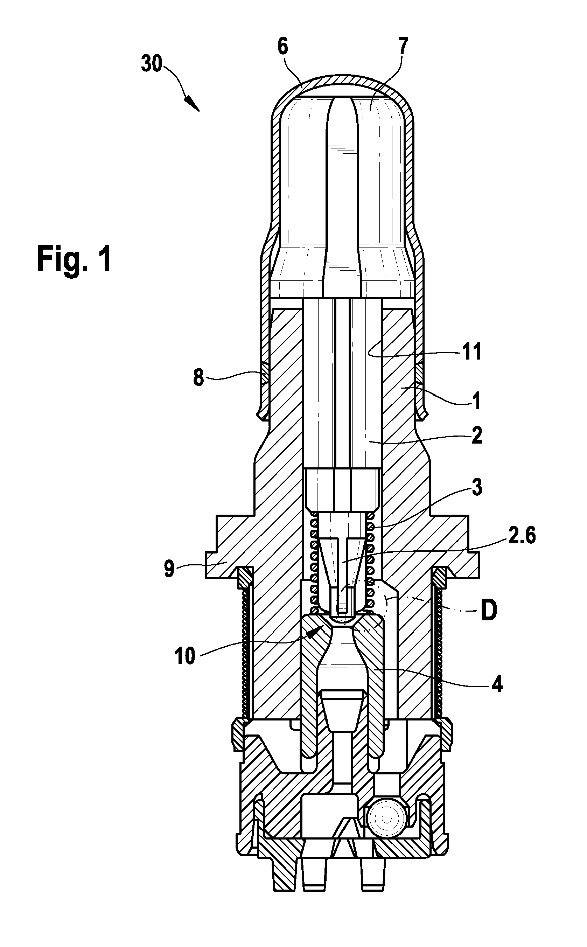

Wie aus Figur 1 ersichtlich ist, umfasst ein erfindungsgemäßes Magnetventil 30 neben einer nicht dargestellten Magnetbaugruppe eine Ventilpatrone, welche analog zum herkömmlichen Magnetventil 40 gemäß Figur 7 eine Kapsel 6, einen Ventileinsatz 1, einen Stößel 2, eine Rückstellfeder 3 und einen Anker 7 umfasst. Bei der Herstellung des Magnetventils 30 werden die Kapsel 6 und der Ventileinsatz 1 der Ventilpatrone durch Pressen aufeinander gefügt und durch eine Dichtschweißung 8 wird die Ventilpatrone hydraulisch gegenüber der Atmosphäre abgedichtet. Zusätzlich nimmt der Ventileinsatz 1 die im hydraulischen System auftretenden Druckkräfte auf und leitet diese über einen Verstemmflansch 9 an einen nicht dargestellten Verstemmbereich auf einem Fluidblock weiter. Zudem nimmt der Ventileinsatz 1 den so genannten Ventilkörper 4 auf, welcher einen Ventilsitz 10 umfasst, in welchen der Stößel 2 dichtend eintaucht, um die Dichtfunktion des Magnetventils 30 umzusetzen. Wie weiter aus Figur 1 ersichtlich ist, werden der Stößel 2 über eine Stößelführung 11 und die Rückstellfeder 3 über Zentriermittel 2.6 am Stößel 2 im Ventileinsatz 1 geführt, wobei die Rückstellfeder 3 im Gegensatz zum herkömmlichen Magnetventil 40 gemäß Fig. 7 nicht nur einseitig über eine relativ kurze Länge einer Federführung 22 auf dem Stößel 2 zentriert ist, sondern durch die Zentriermittel 2.6 über die nahezu gesamte Federlänge radial geführt und stabilisiert wird, so dass auch das andere Ende der Rückstellfeder 3 zentriert und stabilisiert ist, welches auf dem Ventilkörper 4 aufliegt.

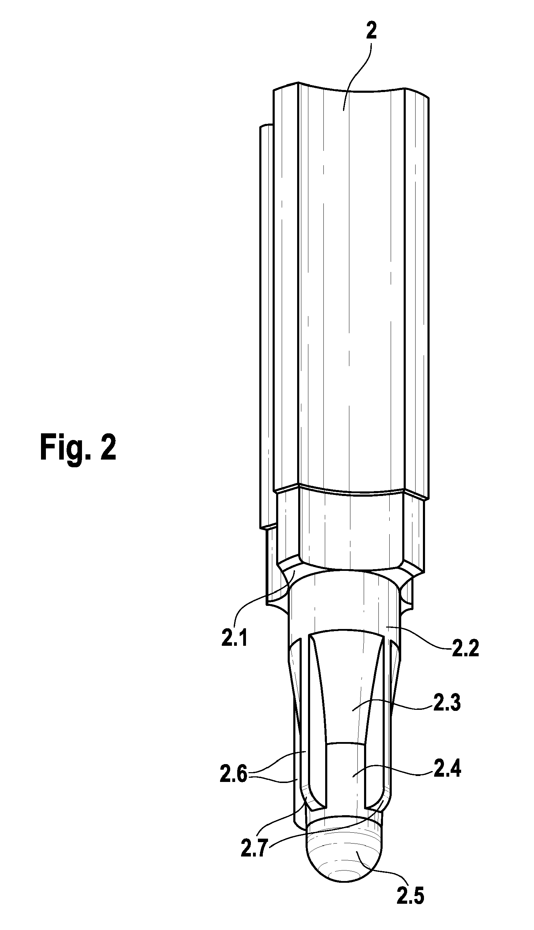

Wie aus Figur 2 ersichtlich ist, umfasst der Stößel 2 für das erfindungsgemäße Magnetventil 30 gemäß Figur 1 eine Anlagefläche 2.1, eine Federführung 2.2, durch welche die aufgesteckte Rückstellfeder 3 über einen kurzen Bereich innen radial geführt wird, einen Stößelkonus 2.3, einen Übergangsbereich 2.4, eine Stößelkalotte 2.5, welche dichtend in den Ventilsitz 10 eintaucht, und Zentriermittel 2.6. Im dargestellten Ausführungsbeispiel sind die Zentriermittel als vier von der Federführung 2.2 des Stößels 2 ausgehende axial verlaufende Zentrierstege 2.6 ausgeführt, welche einen mittleren Abstand von 90° zu einander aufweisen. Die Abmessungen der axialen Zentrierstege 2.6 sind in radialer Richtung an den Innendurchmesser der Rückstellfeder 3 angepasst, so dass der Umfang der Federführung 2.2 über den Stößelkonus 2.3 bis in den Übergangsbereich 2.4 des Stößels 2 verlängert wird. Dadurch wird die Rückstellfeder 3 von innen über einen wesentlichen Teil ihrer Länge zentriert und radial geführt. Durch die Zentriermittel 2.6 wird in vorteilhafter Weise verhindert, dass es durch eine Fluidströmung im Magnetventil 30 zu einer unerwünschten Beeinflussung des Federverhaltens kommt. So können die Zentriermittel 2.6 beispielsweise ein seitliches Ausbrechen der Rückstellfeder 3 und/oder ein Abheben der Rückstellfeder 3 vom Ventilkörper 4 und/oder Relativbewegungen bzw. Schwingungen der Windungen der Rückstellfeder 3 verhindern.

Die axialen Zentrierstege 2.6 am Stößel 2 werden so ausgelegt, dass ein umlaufend wirkender Strömungskraftanteil durch das Fluid nicht zu einer Rotationsbewegung des Stö-ßels 2 führt, um den verschleißmindernden Effekt der Erfindung zu erhalten. Die Länge der Zentriermittel 2.6 für die Rückstellfeder 3 in Richtung Stößelkalotte 2.5 ist auf die sonstigen Einsatzbedingungen abgestimmt. So sind die Zentrierstege 2.6 beispielsweise nicht bis an die Stößelkalotte 2.5 herangezogen, um das Durchflussverhalten der Ventilbaugruppe nicht zu beeinträchtigten. Zudem wird der Auslauf der axial verlaufenden Zentrierstege 2.6 in Richtung der Stößelkalotte 2.5 so ausgeführt und an die Federeigenschaften angepasst, dass ein Einhaken von Federteilen bzw. Federwindungen am Ende 2.7 der Zentrierstege 2.6 vermieden werden kann.

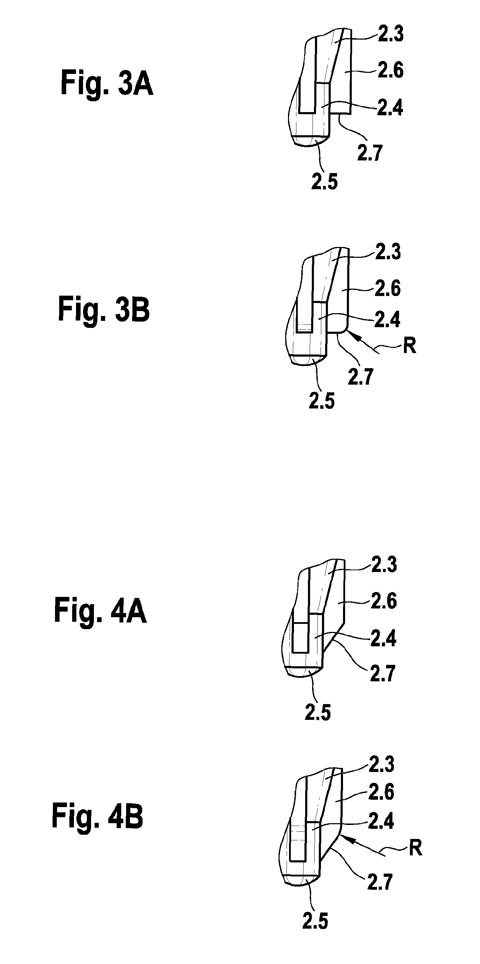

Figur 3 und 4 zeigen verschiedene Ausführungsbeispiele der axial verlaufenden Zentrierstege 2.6. Figur 3 zeigt Ausführungsformen der Zentrierstege 2.6, welche am Ende 2.7 nahezu rechtwinklig auslaufen. Das Ende 2.7 der Zentrierstege 2.6 gemäß Darstellung A weist eine gerade Kante auf und das Ende 2.7 gemäß Darstellung B ist abgerundet ausgeführt, wobei ein Radius R der Abrundung von Eigenschaften der Rückstellfeder 3 abhängig ist, beispielsweise von der Ausführung der Windungen, wie Abmessungen, Abstand, Form usw.

Figur 4 zeigt Ausführungsformen der Zentrierstege 2.6, welche am Ende 2.7 flach unter einem vorgebbaren Winkel auslaufen. Das Ende 2.7 der Zentrierstege 2.6 gemäß Darstellung A weist eine Kante als Übergang in den Auslauf des jeweiligen Zentrierstegs 2.6 auf und das Ende 2.7 gemäß Darstellung B weist eine abgerundete Kante als Übergang auf, wobei der Radius R der Abrundung von den Eigenschaften der Rückstellfeder 3 abhängig ist. Durch die Ausführungsformen gemäß Figur 4 kann ein sanfter Übergang realisiert werden.

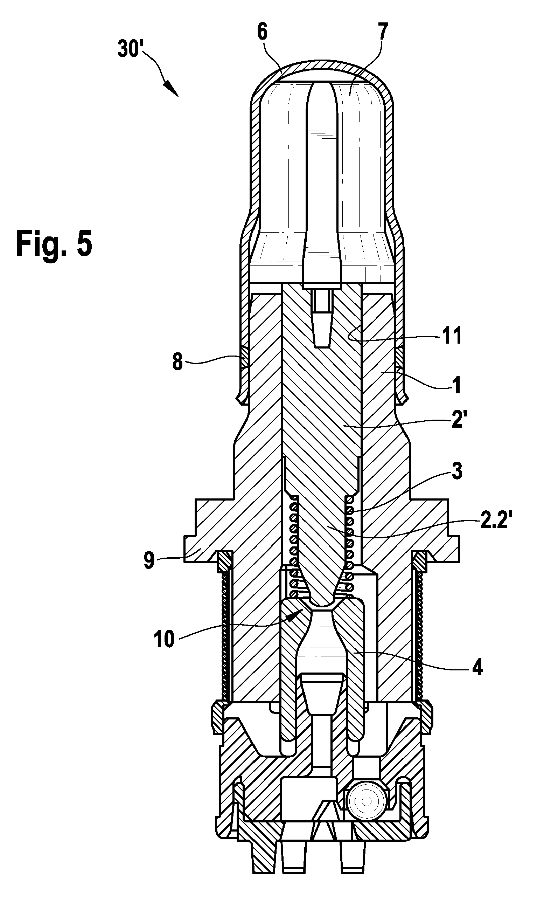

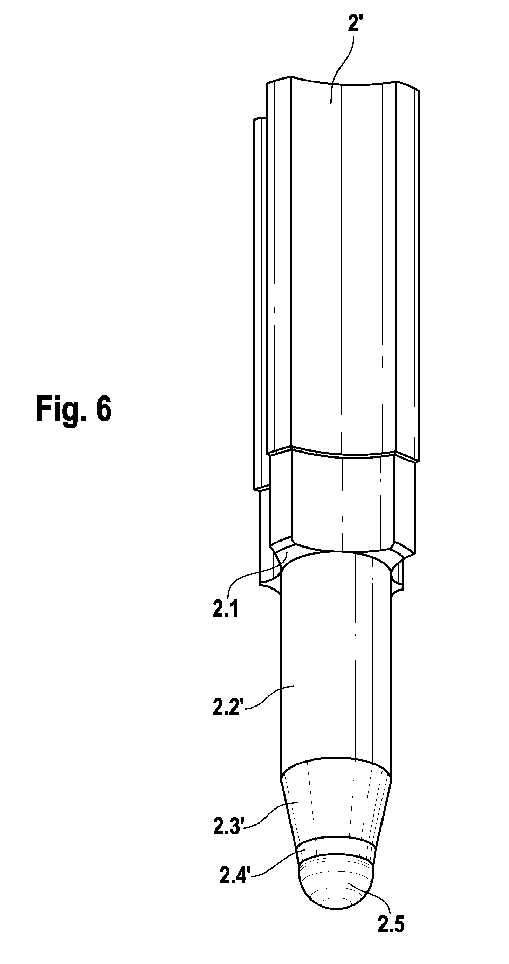

Fig. 5 und 6 zeigen ein weiteres Ausführungsbeispiel eines erfindungsgemäßen Magnetventils 30'. Wie aus Figur 5 ersichtlich ist, umfasst das erfindungsgemäße Magnetventil 30' analog zum Magnetventil 30 gemäß Figur 1 eine Kapsel 6, einen Ventileinsatz 1, einen Stößel 2', eine Rückstellfeder 3 und einen Anker 7, wobei die Kapsel 6 und der Ventileinsatz 1 durch Pressen aufeinander gefügt und durch eine Dichtschweißung 8 hydraulisch gegenüber der Atmosphäre abgedichtet sind. Zudem nimmt der Ventileinsatz 1 den Ventilkörper 4 auf, welcher einen Ventilsitz 10 umfasst, in welchen der Stößel 2' dichtend eintaucht, um die Dichtfunktion des Magnetventils 30' umzusetzen. Wie weiter aus Figur 5 ersichtlich ist, werden der Stößel 2' über eine Stößelführung 11 und die Rückstellfeder 3 über Zentriermittel 2.2' am Stößel 2' im Ventileinsatz 1 geführt, wobei die Rückstellfeder 3 im Gegensatz zum herkömmlichen Magnetventil 40 gemäß Fig. 7 nicht nur einseitig über eine relativ kurze Länge einer Federführung 22 auf dem Stößel 2 zentriert ist, sondern durch die als verlängerte Federführung 2.2' ausgeführten Zentriermittel über die nahezu gesamte Federlänge radial geführt und stabilisiert wird, so dass auch das andere Ende der Rückstellfeder 3 zentriert und stabilisiert ist, welches auf dem Ventilkörper 4 aufliegt.

Wie aus Figur 6 ersichtlich ist, umfasst der Stößel 2' für das erfindungsgemäße Magnetventil 30' gemäß Figur 5 eine Anlagefläche 2.1, eine verlängerte Federführung 2.2', durch welche die aufgesteckte Rückstellfeder 3 über einen wesentlichen Teil ihrer Länge innen radial geführt wird, einen verkürzten Stößelkonus 2.3', einen verkürzten Übergangsbereich 2.4' und eine Stößelkalotte 2.5, welche dichtend in den Ventilsitz 10 eintaucht. Im dargestellten Ausführungsbeispiel sind die Zentriermittel als verlängerte Federführung 2.2' ausgeführt, welche den Stößelkonus 2.3' und den Übergangsbereich 2.4' des Stößels 2' verkürzt, so dass der Stößelkonus 2.3' in Richtung der Stößelkalotte 2.5 verlagert ist. Durch die verlängerte Federführung 2.2' wird die Rückstellfeder 3 von innen über den wesentlichen Teil ihrer Länge zentriert und radial geführt, so dass in vorteilhafter Weise verhindert wird, dass es durch eine Fluidströmung im Magnetventil 30' zu einer unerwünschten Beeinflussung des Federverhaltens kommt. So kann die verlängerte Federführung 2.2' analog zu den axialen Zentrierstegen 2.6 beispielsweise ein seitliches Ausbrechen der Rückstellfeder 3 und/oder ein Abheben der Rückstellfeder 3 vom Ventilkörper 4 und/oder Relativbewegungen bzw. Schwingungen der Windungen der Rückstellfeder 3 verhindern.

Die Abmessung der verlängerten Federführung 2.2' für die Rückstellfeder 3 ist auf die Rückstellfeder 3 und die sonstigen Einsatzbedingungen abgestimmt. So wird die verlängerte Federführung 2.2' nicht bis an die Stößelkalotte 2.5 herangezogen, um das Durchflussverhalten der Ventilbaugruppe nicht negativ zu beeinflussen.

## Patentansprüche

1. Magnetventil mit einem Ventileinsatz (1) und einem über eine Stößelführung (11) im Ventileinsatz (1) beweglich geführten Stößel (20, 2, 2'), welcher sich über eine an einer Anlagefläche (21, 2.1) des Stößels (20, 2, 2') anliegende Rückstellfeder (3) auf einem Ventilkörper (4) abstützt, wobei die Rückstellfeder an einem Ende von einer an die Anlagefläche (21, 2.1) anschließende Federführung (22, 2.2) des Stößels (20, 2, 2') von innen radial geführt ist, **gekennzeichnet durch** Zentriermittel (2.6, 2.2'), welche so am Stößel (2, 2') angeordnet sind, dass die Rückstellfeder (3) von innen über einen wesentlichen Teil ihrer Länge zentriert und radial geführt ist.

2. Magnetventil nach Anspruch 1, **dadurch gekennzeichnet, dass** die Zentriermittel als mindestens zwei von der Federführung (2.2) des Stößels (2) ausgehende axial verlaufende Zentrierstege (2.6) ausgeführt sind, welche den Umfang der Federführung (2.2) über einen Stößelkonus (2.3) bis in einen Übergangsbereich (2.4) des Stößels (2) verlängern.

3. Magnetventil nach Anspruch 2, **dadurch gekennzeichnet, dass** die Abmessungen der mindestens zwei axialen Zentrierstege (2.6) in radialer Richtung an den Innendurchmesser der Rückstellfeder (3) angepasst sind.

4. Magnetventil nach Anspruch 2 oder 3, **dadurch gekennzeichnet, dass** die mindestens zwei axial verlaufenden Zentrierstege (2.6) an einem Ende (2.7) nahezu rechtwinklig auslaufen, welches einer Stößelkalotte (2.5) zugewandt ist.

5. Magnetventil nach Anspruch 4, **dadurch gekennzeichnet, dass** die nahezu rechtwinkligen Enden (2.7) der mindestens zwei axial verlaufenden Zentrierstege (2.6) abgerundet ausgeführt sind, wobei ein Radius der Abrundung von Eigenschaften der Rückstellfeder (3) abhängig ist.

6. Magnetventil nach Anspruch 2 oder 3, **dadurch gekennzeichnet, dass** die mindestens zwei axial verlaufenden Zentrierstege (2.6) an einem Ende (2.7) flach unter einem vorgebbaren Winkel auslaufen, welches einer Stößelkalotte (2.5) zugewandt ist.

7. Magnetventil nach Anspruch 6, **dadurch gekennzeichnet, dass** die unter einem vorgebbaren Winkel flach auslaufenden Enden (2.7) der mindestens zwei axial verlaufenden Zentrierstege (2.6) einen abgerundeten Übergang aufweisen, dessen Radius von Eigenschaften der Rückstellfeder (3) abhängig ist.

8. Magnetventil nach einem der Ansprüche 2 bis 7, **dadurch gekennzeichnet, dass** der Stößel (2) vier axial verlaufende Zentrierstege (2.6) umfasst, welche vorzugsweise einen mittleren Abstand von 90° zu einander aufweisen.

9. Magnetventil nach Anspruch 1, **dadurch gekennzeichnet, dass** die Zentriermittel als verlängerte Federführung (2.2') ausgeführt sind, welche einen Stößelkonus (2.3') und einen Übergangsbereich (2.4') des Stößels (2') verkürzen, wobei der Stößelkonus (2.3') in Richtung einer Stößelkalotte (2.5) verlagert ist und die Rückstellfeder (3) von innen über den wesentlichen Teil ihrer Länge zentriert und radial geführt ist.
